# EUROPÄISCHE PATENTSCHRIFT

(11) **EP 3 412 805 B1**
(45) Veröffentlichungstag und Bekanntmachung des Hinweises auf die Patenterteilung: **01.09.2021**
(21) Anmeldenummer: 18174569.6
(22) Anmeldetag: 28.05.2018
(51) Int. Cl.: D01G 23/04

(54) **DRUCKREGELUNG IN EINER FLOCKENSPEISUNG**
PRESSURE SETTING IN A FIBRE TUFTS FEED
RÉGLAGE DE PRESSION DANS UNE ALIMENTATION EN FLOCONS

(30) Priorität: 08.06.2017 CH 7422017
(43) Veröffentlichungstag der Anmeldung: 12.12.2018
(73) Patentinhaber: Maschinenfabrik Rieter AG, 8406 Winterthur (CH)
(72) Erfinder: WOLFER, Tobias, 8008 Zürich (CH); GSCHLIESSER, Gerhard, 8400 Winterthur (CH)

(56) Entgegenhaltungen:
- WO-A1-2014/001867
- CH-A- 531 576
- DE-A1- 3 617 526

## Beschreibung

Die Erfindung betrifft ein Verfahren und eine Vorrichtung zur Druckregelung in einer Flockenspeisung einer faserverarbeitenden Maschine.

Faserverarbeitende Maschinen wie beispielsweise Zwischenspeicher, Mischer oder Karden finden Anwendung in der Spinnereivorbereitung und dienen der Reinigung, Mischung und der Auflösung des Fasergutes in Einzelfasern sowie deren Parallelisierung. Die Maschinen haben gemeinsam, dass sie über eine Flockenspeisung verfügen. Das zu verarbeitende Fasermaterial wir in Form von Faserflocken durch eine pneumatische Förderung den Maschinen zugeführt. Dabei ist den Maschinen in der Regel ein Füllschacht zugeordnet welcher durch ein Fördersystem mit zu verarbeitenden Fasern aus einer vorgelagerten Maschine versorgt wird. Die Fasern werden dabei in Form von Faserflocken mit einem Luftstrom transportiert. Aus dem Füllschacht werden die Faserflocken in die Maschine zur Verarbeitung eingebracht. Dabei spielt die Gleichmässigkeit der aus dem Füllschacht auslaufenden Faserflockenschicht eine wichtige Rolle bezüglich der Lebensdauer der nachfolgenden Arbeitselemente und den Anforderungen an die Qualität des verarbeiteten Produktes. Auch wird die Gleichmässigkeit des durch die Maschine hergestellten Produktes durch die Gleichmässigkeit der aus dem Füllschacht auslaufenden Faserflockenschicht beeinflusst. Eine ebenfalls wichtige technologische Grösse in der Verarbeitung ist das Gewicht der auslaufenden Faserflockenschicht. Die Grösse des Gewichts und die Gleichmässigkeit der aus dem Füllschacht auslaufenden Faserflockenschicht werden wesentlich beeinflusst durch die Druckverhältnisse im Füllschacht.

In der Speisung werden die Faserflocken wiederum von der Transportluft getrennt und der Verarbeitung zugeführt. Die EP 0 563 700 A1 offenbart eine Speisung bei welcher ein Faserschacht pneumatisch mit Faserflocken befüllt wird. Eine Schachtwand weist eine Perforation auf, durch welche die Transportluft unter Zurücklassung der Fasern im Faserschacht entweichen kann. Anschliessend an die perforierte Wand ist ein Luftsammelkanal vorgesehen aus dem die Luft über einen Abluftkanal weitertransportiert wird. Im Abluftkanal ist eine Drosselklappe vorgesehen, welche durch ihre Bauart eine Konstanthaltung des Abluftdruckes ermöglicht. Nachteilig dabei ist, dass die Druckverhältnisse im Füllschacht nicht allein durch den Druck im Abluftkanal bestimmt werden und das Gewicht der Faserflocken selbst, welches zu einer Verdichtung der Faserflocken im unteren Bereich des Füllschachtes führt, unberücksichtigt bleibt. Durch das Gewicht der Faserflocken im Füllschacht und durch den mit der Transportluft herbeigeführten Druck im Füllschacht werden die Faserflocken verdichtet.

DE 36 17 526 A1 offenbart ein Verfahren zum Speisen einer Anzahl von Karden, Krempeln o. dgl. mit einer pneumatischen Faserflockentransportleitung zu einer Mehrzahl von Ablagerungsschächten, bei dem die abgelagerten Faserflocken durch einen Ventilator pneumatisch verdichtet werden, wobei ein bestimmter Füllstand des Flockenmaterials im Ablagerungsschacht vorhanden ist und bei dem die Speisung der Ablagerungsschächte durch eine faserflockenliefernde Einrichtung erfolgt, wobei der Druck in der Transportleitung oder im Ablagerungsschacht gemessen und geregelt wird.

Die Aufgabe der Erfindung ist es demnach eine Vorrichtung zur Regelung eines Druckes in einer Flockenspeisung zu schaffen, welche eine gleichmässige Verdichtung der Faserflocken im Speicher unabhängig von einer Flockenzuführung und einem Füllstand im Speicher ermöglicht, sodass ein Druck auf die Faserflocken an der unteren Begrenzung des Speichers konstant ist

Die Aufgabe wird gelöst durch die Merkmale im kennzeichnenden Teil der unabhängigen Ansprüche.

Zur Lösung der Aufgabe werden eine neuartige Vorrichtung und ein zugehöriges Verfahren zur Regelung eines Druckes in einer Flockenspeisung mit einem Speicher vorgeschlagen. Der Speicher ist mit Faserflocken befüllbar und mit einem Abluftventilator mit einem Antrieb verbunden, wobei im Speicher eine Füllstandsmessung und eine Druckmessung vorgesehen sind. Jeweils einem Füllstand ist ein Sollwert für den Druck zugeordnet. Eine Steuerung des Antriebs des Abluftventilators ist zur Regelung des Sollwertes für den Druck im Speicher vorgesehen. Mit dieser Vorrichtung ist es möglich den steigenden Einfluss der Faserflocken auf die Verdichtung der Faserflocken in einem unteren Bereich des Speichers bei zunehmendem Füllstand durch einen abnehmenden Luftdruck zu kompensieren.

Die Faserflocken liegen im Speicher auf einer unteren Begrenzung auf. Diese untere Begrenzung ist bei verschiedenen Maschinen auf unterschiedliche Weise gebildet und kann beispielsweise als ein Förderband, eine Dosiervorrichtung oder ein Austragswalzenpaar ausgebildet sein. Für den weiteren Verarbeitungsprozess ist die Verdichtung der Faserflocken an dieser unteren Begrenzung des Speichers massgebend. Bei einem hohen Füllstand im Speicher werden die Faserflocken bereits durch eine vorhandene Materialsäule an der unteren Begrenzung verdichtet. Die Verdichtung, respektive Gewichtskraft der Materialsäule ist dabei abhängig von der Art des Fasermaterials und der Höhe der Materialsäule. Hinzu kommt eine Belastung durch den oberhalb der Materialsäule herrschenden Druck im Speicher.

Vorteilhafterweise weist der Speicher einen Füllschacht und einen Abluftkanal auf, wobei der Füllschacht und der Abluftkanal durch eine luftdurchlässige Wand getrennt sind und die Druckmessung im Abluftkanal angeordnet ist. Die über einen Zuführkanal in den Speicher eingebrachten Faserflocken werden durch die luftdurchlässige Wand von der Transportluft getrennt und verbleiben im Füllschacht. Die Transportluft wird durch den Ventilator aus dem Abluftkanal abgeführt. Aufgrund der Verbindung des Füllschachtes und des Abluftkanals durch die luftdurchlässige Wand herrscht im Füllschacht wie auch im Abluftkanal derselbe statische Druck, wobei der Druckverlust über die luftdurchlässige Wand vernachlässigbar ist. Die Druckmessung kann grundsätzlich im Füllschacht oder im Abluftkanal angeordnet sein. Wobei durch die bevorzugte Anordnung der Druckmessung im Abluftkanal eine Verschmutzung der Druckmessung durch Fasern weitestgehend verhindert und eine betriebssichere Messung erreicht wird. Ebenfalls ist es von Vorteil, wenn die Füllstandsmessung als eine kontinuierliche Messung ausgebildet ist. Als kontinuierliche Messung sind aus dem Stand der Technik verschiedene Verfahren, wie beispielsweise Ultraschall- oder kapazitive Verfahren, bekannt. Dabei kann über eine einfache Umrechnungsformel der Sollwert für den Druck bei jedem Füllstand ermittelt werden. Es ist jedoch auch möglich die Sollwerte für den Druck in einer Tabelle zu bestimmen und dabei den Füllstand in Stufen umzurechnen. Erfindungsgemäß ist der dem Füllstand zugeordnete Druck mit abnehmendem Füllstand kontinuierlich zunehmend. Eine Ermittlung des Sollwertes für den Druck erfolgt erfindungsgemäß derart, dass der Druck auf die Faserflocken an der unteren Begrenzung des Speichers konstant ist. Hierzu ist in der Ermittlung der Sollwerte für den Druck zu beachten, dass die Materialsäule der Faserflocken mit zunehmender Höhe nicht eine gleichmässig zunehmende Kraft auf die Faserflocken an der unteren Begrenzung ausübt, da die Dichte der Materialsäule nach oben abnehmend ist.

Bevorzugterweise sind für unterschiedliche Materialien oder Materialgemische von Faserflocken verschiedene Sollwerte bei gleichem Füllstand vorgesehen. Da die verschiedenen zur Anwendung kommenden Materialien stark unterschiedliche Eigengewichte aufweisen, ist davon abhängig auch eine unterschiedliche Verdichtung aufgrund der Materialsäule gegeben. Beispielsweise sind Polyesterfasern schwerer als Baumwollfasern. Vorteilhafterweise weist die Steuerung, welche auch in die Maschinensteuerung integriert sein kann, ein Eingabemittel zur Eingabe des zu verarbeitenden Materials der Faserflocken auf. Als Eingabemittel können Tastaturen, Touchscreens, Vorwahltasten oder ähnliche Mittel vorgesehen sein. Es ist auch denkbar, dass eine Materialwahl aus einer übergeordneten Steuerung oder einem zentralen Steuersystem in die Steuerung des Druckes in der Flockenspeisung übernommen wird.

Ebenfalls vorgeschlagen wird ein Verfahren zur Regelung eines Druckes in einer Flockenspeisung mit einem Speicher zur Befüllung mit Faserflocken und mit einem Abluftventilator mit einem Antrieb, wobei im Speicher ein Füllstand und ein Druck gemessen werden. Mit dem gemessenen Füllstand wird in einer Steuerung ein Sollwert für den Druck bestimmt und durch den Antrieb des Abluftventilators der Druck im Speicher auf den bestimmten Sollwert geregelt. Die Bestimmung des Sollwertes für den Druck im Speicher erfolgt derart, dass bei einem zunehmenden Füllstand der aus dem Füllstand bestimmte Druck abnimmt.

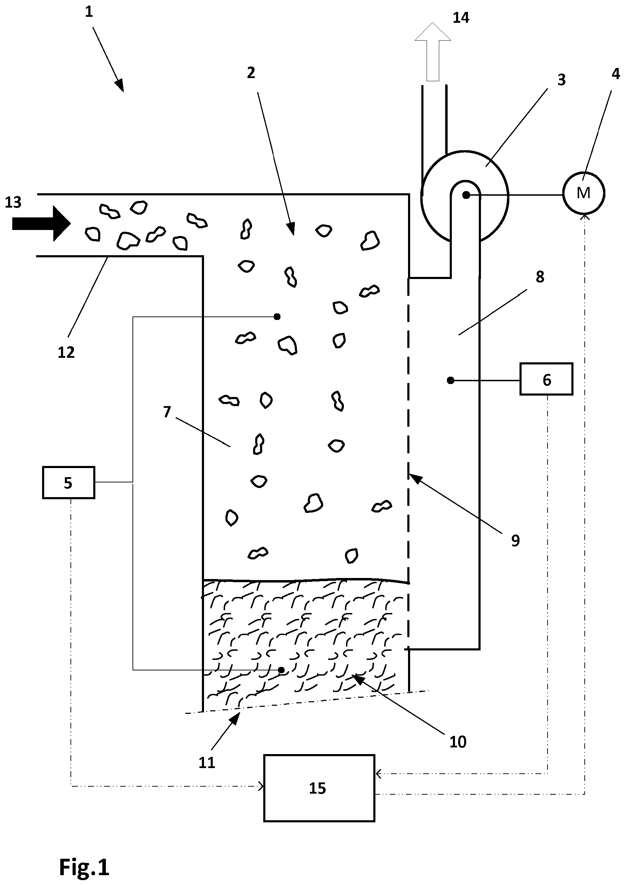

Im Folgenden wird die Erfindung anhand von einer beispielhaften Ausführungsform erklärt und durch Figur 1 näher erläutert.

Die Figur 1 zeigt eine schematische Darstellung einer Flockenspeisung 1. Die Faserflocken 10 werden über einen Zuführkanal 12 durch eine pneumatische Förderung 13 zur Speisung 1 geführt. Die Speisung 1 umfasst einen Speicher 2 und einen Abluftventilator 3 mit einem Antrieb 4. Der Speicher 2 ist durch eine luftdurchlässige Wand 9 getrennt in einen Füllschacht 7 und einen Abluftkanal 8. Die in den Speicher 2 gelangenden Faserflocken 10 werden durch die luftdurchlässige Wand 9 von der Transportluft getrennt, wobei die Transportluft mit dem Ventilator 3 aus dem Abluftkanal 8 abgesaugt und als Abluft 14 einer weiteren Verwendung zugeführt oder in die Umgebung abgegeben wird. Im Füllschacht 7 ist eine Füllstandsmessung 5 eingebaut, welche als eine kontinuierliche Messung ausgebildet ist. Der aktuelle Füllstand wird an eine Steuerung 15 übermittelt. Die Steuerung 15 bestimmt aus einen dem Füllstand entsprechenden Sollwert für den Druck im Füllschacht. Der Abluftkanal 8 ist mit einer Druckmessung 6 versehen, welche den jeweils aktuellen, respektive einen Istwert für den Druck im Abluftkanal 8 ebenfalls an die Steuerung 15 übermittelt. Aufgrund des aus dem Füllstand im Füllschacht ermittelten Sollwertes für den Druck im Abluftkanal 8 wird durch die Steuerung 15 der Antrieb 4 des Ventilators 3 geregelt, sodass der gemessene Istwert des Druckes dem Sollwert entspricht.

Dadurch dass ein hoher Füllstand im Füllschacht 7, welcher einen grösseren Druck auf die Faserflocken 10 an der unteren Begrenzung 11 des Füllschachtes 7 ausübt, durch einen entsprechend geringeren Druck oberhalb der Faserflocken im Füllschacht 7 ausgeglichen wird, ist es möglich einen konstanten vom Füllstand des Speichers 2 unabhängige Faserflockendichte an der unteren Begrenzung 11 des Füllschachtes 7 zu erreichen.

### Legende

- 1: Speisung
- 2: Speicher
- 3: Ventilator
- 4: Antrieb Ventilator
- 5: Füllstandsmessung
- 6: Druckmessung
- 7: Füllschacht
- 8: Abluftkanal
- 9: luftdurchlässige Wand
- 10: Faserflocken
- 11: unteren Begrenzung des Speichers
- 12: Zuführkanal
- 13: Pneumatische Förderung
- 14: Abluft
- 15: Steuerung

## Patentansprüche

1. Vorrichtung zur Regelung eines Luftdruckes in einer Flockenspeisung (1) mit einem Speicher (2), welcher mit Faserflocken (10) befüllbar ist, und einem Abluftventilator (3) mit einem Antrieb (4), wobei im Speicher (2) eine Füllstandsmessung (5) und eine Luftdruckmessung (6) vorgesehen sind, wobei in einer Steuerung (15) des Antriebs (4) des Abluftventilators (3) jeweils einem Füllstand ein Sollwert für den Luftdruck zugeordnet ist, wobei der dem Füllstand zugeordnete Sollwert für den Luftdruck mit abnehmendem Füllstand kontinuierlich zunehmend ist und wobei die Steuerung (15) des Antriebs (4) des Abluftventilators (3) zur Regelung des Sollwertes für den Luftdruck im Speicher (2) vorgesehen ist wodurch der Druck auf die Faserflocken (10) an der unteren Begrenzung (11) des Speichers (2) konstant ist.

2. Vorrichtung nach Anspruch 1, **dadurch gekennzeichnet, dass** der Speicher (2) einen Füllschacht (7) und einen Abluftkanal (8) aufweist, wobei der Füllschacht (7) und der Abluftkanal (8) durch eine luftdurchlässige Wand (9) getrennt sind und die Luftdruckmessung (6) im Abluftkanal (8) angeordnet ist.

3. Vorrichtung nach Anspruch 1 oder 2, **dadurch gekennzeichnet, dass** die Füllstandsmessung (5) als eine kontinuierliche Messung ausgebildet ist.

4. Vorrichtung nach mindestens einem der vorangehenden Ansprüche, **dadurch gekennzeichnet, dass** für unterschiedliche Materialien oder Materialgemische von Faserflocken (10) verschiedene Sollwerte bei gleichem Füllstand in der Steuerung (15) vorgesehen sind.

5. Vorrichtung nach mindestens einem der vorangehenden Ansprüche, **dadurch gekennzeichnet, dass** die Steuerung (15) ein Eingabemittel aufweist zur Eingabe des zu verarbeitenden Materials der Faserflocken (10).

6. Verfahren zur Regelung eines Luftdruckes in einer Flockenspeisung mit einem Speicher (2) zur Befüllung mit Faserflocken (10) und mit einem Abluftventilator (3) mit einem Antrieb (4), wobei im Speicher (2) ein Füllstand und ein Luftdruck gemessen werden, wobei durch den gemessenen Füllstand ein Sollwert für den Luftdruck bestimmt und durch eine Steuerung (15) des Antriebs (4) des Abluftventilators (3) der Luftdruck im Speicher (2) auf den Sollwert geregelt wird, wobei bei einem zunehmenden Füllstand der aus dem Füllstand bestimmte Sollwert für den Luftdruck abnimmt, wobei der Druck auf die Faserflocken (10) an der unteren Begrenzung (11) des Speichers (2) konstant ist.

## Claims

1. A device for regulating an air pressure in a flock feed (1), comprising a storage device (2), which can be filled with fiber flocks (10), and an exhaust air fan (3) having a drive (4), wherein a filling level measurement (5) and an air pressure measurement (6) are provided in the storage device (2), wherein in a controller (15) of the drive (4) of the exhaust air fan (3) a target value for the air pressure is assigned to a filling level, and wherein the air pressure assigned to the filling level increases continuously with a decrease in filling level, and wherein the controller (15) of the drive (4) of the exhaust air fan (3) is provided for regulating the target value for the air pressure in the storage device (2), whereby the pressure on the fiber flocks (10) at the lower boundary (11) of the storage device (2) is constant.

2. The device according to claim 1, **characterized in that** the storage device (2) has a filling chute (7) and an exhaust air conduit (8), wherein the filling chute (7) and the exhaust air conduit (8) are separated by an air-permeable wall (9), and the air pressure measurement (6) is arranged in the exhaust air conduit (8).

3. The device according to claim 1 or 2, **characterized in that** the filling level measurement (5) is embodied as a continuous measurement.

4. The device according to at least one of the preceding claims, **characterized in that** different target values are provided in the controller (15) for different materials or mixtures of materials of fiber flocks (10) at the same filling level.

5. The device according to at least one of the preceding claims, **characterized in that** the controller (15) has input means for input of the material of the fiber flocks (10) to be processed.

6. A method for regulating an air pressure in a flock feed comprising a storage device (2) for filling with fiber flocks (10) and comprising an exhaust air fan (3) with a drive (4), wherein a filling level and an air pressure are measured in the storage device (2), wherein a target value for the air pressure is determined by the measured filling level, and the air pressure in the storage device (2) is regulated at the target value by a controller (15) of the drive (4) of the exhaust air fan (3), and wherein the air pressure determined from the filling level decreases with an increase in filling level, whereby the pressure on the fiber flocks (10) at the lower boundary (11) of the storage device (2) is constant.

## Revendications

1. Dispositif permettant la régulation d'une pression d'air dans une alimentation en flocons (1), comportant un réservoir (2) qui peut être rempli de flocons de fibres (10) et un ventilateur d'extraction (3) comportant un entraînement (4), une mesure de niveau de remplissage (5) et une mesure de pression d'air (6) étant prévues dans le réservoir (2), une valeur cible pour la pression d'air étant attribuée respectivement à un niveau de remplissage dans une commande (15) de l'entraînement (4) du ventilateur d'extraction (3), la valeur cible pour la pression d'air attribuée au niveau de remplissage augmentant continuellement lorsque le niveau de remplissage diminue et la commande (15) de l'entraînement (4) du ventilateur d'extraction (3) étant prévue pour réguler la valeur cible pour la pression d'air dans le réservoir (2), moyennant quoi la pression sur les flocons de fibres (10) est constante au niveau de la limite inférieure (11) du réservoir (2).

2. Dispositif selon la revendication 1, **caractérisé en ce que** le réservoir (2) présente un puits de remplissage (7) et un conduit d'extraction (8), le puits de remplissage (7) et le conduit d'extraction (8) étant séparés par une paroi perméable à l'air (9) et la mesure de pression d'air (6) étant disposée dans le conduit d'extraction (8).

3. Dispositif selon la revendication 1 ou 2, **caractérisé en ce que** la mesure de niveau de remplissage (5) est réalisée en tant que mesure continue.

4. Dispositif selon au moins l'une des revendications précédentes, **caractérisé en ce que**, pour différents matériaux ou mélanges de matériaux de flocons de fibres (10), différentes valeurs cibles pour un même niveau de remplissage sont prévues dans la commande (15).

5. Dispositif selon au moins l'une des revendications précédentes, **caractérisé en ce que** la commande (15) présente un moyen d'entrée pour faire entrer le matériau des flocons de fibres (10) à usiner.

6. Procédé permettant la régulation d'une pression d'air dans une alimentation en flocons comportant un réservoir (2) permettant le remplissage avec des flocons de fibres (10) et comportant un ventilateur d'extraction (3) comportant un entraînement (4), un niveau de remplissage et une pression d'air étant mesurés dans le réservoir (2), une valeur cible pour la pression d'air étant déterminée par le niveau de remplissage mesuré et la pression d'air dans le réservoir (2) étant régulée à la valeur cible par une commande (15) de l'entraînement (4) du ventilateur d'extraction (3), la valeur cible pour la pression d'air déterminée à partir du niveau de remplissage diminuant lorsqu'un niveau de remplissage augmente, la pression sur les flocons de fibres (10) étant constante au niveau de la limite inférieure (11) du réservoir (2).
